# EUROPÄISCHE PATENTSCHRIFT

(11) **EP 0 460 424 B1**
(45) Veröffentlichungstag und Bekanntmachung des Hinweises auf die Patenterteilung: **05.07.1995**
(21) Anmeldenummer: 91107648.7
(22) Anmeldetag: 10.05.1991
(51) Int. Cl.: H01M 10/34, H01M 4/24, H01M 4/32, H01M 4/62, H01M 4/00

(54) **Gasdichter alkalischer Akkumulator**
Gastight alkaline accumulator
Accumulateur alcalin étanche aux gaz

(30) Priorität: 02.06.1990 DE 4017884
(43) Veröffentlichungstag der Anmeldung: 11.12.1991
(73) Patentinhaber: VARTA Batterie Aktiengesellschaft, D-30405 Hannover (DE)
(72) Erfinder: Klaus, Christoph, Dipl.-Ing., W-6200 Wiesbaden (DE); Kruger, Franz-Josef, Dr. Dipl.-Chem., W-6200 Wiesbaden (DE); Sauer, Hans, W-6270 Idstein-Walsdorf (DE); Köhler, Uwe, Dr. Dipl.-Phys., W-6233 Kelkheim (DE)
(74) Vertreter: Kaiser, Dieter Ralf, Dipl.-Ing.

(56) Entgegenhaltungen:
- EP-A- 0 284 333
- EP-A- 0 420 669

## Beschreibung

Die Erfindung betrifft einen gasdichten alkalischen Akkumulator zur Speicherung von elektrischer Energie mit einer positiven Elektrode. die im wesentlichen Nickelhydroxid als aktives Material umfaßt, einer negativen Elektrode und einem zwischen den Elektroden angeordneten Separator in einem geschlossenen Gehäuse.

Auf dem Gebiet der gasdichten alkalischen Akkumulatoren hat sich die technische Entwicklung der letzten Zeit hauptsächlich auf die Verbesserung der Elektrodenkonstruktion sowie auf Maßnahmen zur Förderung des Gasverzehrs, um die gasdichte Funktion noch zuverlässiger zu gestalten, konzentriert. Dadurch hat sich inzwischen eine Typenvielfalt unter den Elektroden ergeben, deren eigentliches elektrochemisch aktives Material jedoch immer noch aus den hergebrachten Substanzen, nämlich Nickelhydroxid bei der positiven Elektrode und Cadmiumhydroxid, Eisenhydroxid, Zinkhydroxid oder Kobalthydroxid bei der negativen Elektrode, besteht. Den meisten marktüblichen gasdichten alkalischen Akkumulatoren liegen demnach auch die klassischen alkalischen Batteriesysteme zugrunde, zu denen auch die Wasserstoff-Speichersysteme hinzugerechnet werden müssen.

Unter den Elektrodenformen in gasdichten alkalischen Akkumulatoren ist der Sintertyp besonders häufig. In gasdichten Wickelzellen gehören beide Elektrodenpolaritäten diesem Typ an. In Knopfzellen liegen beide Elektrodenpolaritäten meist als Preßpulvertabletten, in einem Nickelgewebedrahtkörbchen eingefaßt, vor. Bei anderen Preßelektroden ist die Aktivmasse auf streifenförmige Trägernetze aus Metall aufgepreßt.

Eine besondere Form unter den negativen Elektroden ist die sogenannte Elektrodeposit-Elektrode, die man durch kathodische Metallabscheidung aus Cadmiumsalzlösungen (DE-OS 28 22 821) erhält.

Gemäß einer noch sehr jungen Entwicklung bildet ein Metallschaumgerüst, dessen Porensysteme das aktive Material in pastöser Form aufnimmt, den Träger und Ableiter sowohl für eine positive (US-PS 4 251 603) als auch für eine negative Elektrode (E-PS 185 830).

Der Patentliteratur lassen sich auch Beispiele für verschiedene Kombinationen von Elektrodentypen in gasdichten alkalischen Akkumulatoren entnehmen. So liegen bei einer bekannten Nickel/Wasserstoff-Batterie gemäß E-PS 284 333 beide Elektrodenspezies in Gestalt der erwähnten Metallschaumgerüst-Elektroden vor. Die DE-OS 34 16 817 legt die Kombination einer Cadmiumelektrode des Elektrodeposit-Typs mit einer positiven geladenen Pulverpreßelektrode nahe. Die E-OS 28 072 offenbart die Kombination einer positiven Preßelektrode mit negativen Sinterelektroden.

Der Erfindung liegt die Aufgabe zugrunde, eine gasdichte alkalische Akkumulatorenzelle bereitzustellen, die mit Elektroden bestückt ist, welche sich hinsichtlich Energiespeicherfähigkeit und mechanischer Stabilität optimal ergänzen und welche über einen unaufwendigen, möglichst automatisierbaren Fertigungsprozeß hergestellt werden können.

Die Aufgabe wird erfindungsgemäß durch einen gasdichten alkalischen Akkumulator gelöst, wie er im Patentanspruch 1 angegeben ist.

Danach gehören sowohl die positiven als auch die negativen Elektroden des erfindungsgemäßen Akkumulators dem Typ der Walzelektrode an. Dieser Elektrodentyp hat erst in jüngster Zeit durch Fortschritte in der Walztechnik eine gewisse Verbreitung gefunden. Dabei lassen sich Walzelektroden wegen ihrer mechanischen Festigkeit und Flexibilität besonders gut in Wickelzellen verwenden. Ihre Herstellung, bei der eine im wesentlichen das Aktivmaterial und ein pulverförmiges Kunststoffbindemittel enthaltende Mischung auf ein metallisches Trägermaterial aufgewalzt wird, kann vorzugsweise im Banddurchlauf erfolgen. Auch die Zubereitung der Walzmischung selbst durch trockenes Mischen der abgewogenen, ausschließlich pulverförmigen Komponenten ist problemlos und kommt einem rationellen Fertigungsgang entgegen.

Besonders vorteilhaft lassen sich positive und negative Walzelektroden in einem Nickel/Wasserstoff-Akkumulator kombinieren.

Dessen positiver Elektrode liegt als Trägermaterial ein Ni-Netz, ein vernickeltes Lochband, ein Ni-Streckmetall oder ein Nickelfasergerüst zugrunde. Die darauf aufgebrachte Walzmischung setzt sich aus einer Trockenmischung, die Nickelhydroxid als aktives Material sowie erfindungsgemäß Nickelmetallpulver und mindestens noch ein weiteres Metallpulver aus der Gruppe Co, Cu, Fe, Mo, W, Mn, Cr, Ti und Zn als Leitmittel umfaßt, und einem Kunststoff-Bindemittel zusammen. Außerdem ist ein Zusatz von 5 bis 12 Gew. % Graphit und/oder Ruß zur Trockenmischung möglich. Die Metallpulvermenge sollte erfindungsgemäß zu 5 bis 25 Gew. % und das Nickelhydroxid zu 75 bis 90 Gew. % an der Trockenmischung (d. h. die Gesamtheit aller Mischungskomponenten mit Ausnahme des Bindemittels) beteiligt sein. Das Nickelpulver allein sollte zur Menge der übrigen Metallpulver in einem Gewichtsverhältnis 1 : 1 bis 1 : 20 stehen. Eine besonders vorteilhafte Trockenmischung enthält neben dem Nickelhydroxid erfindungsgemäß noch kleinere Mengen weiterer Hydroxide, zumindest jedoch eins aus der Reihe Co(OH)₂, Cd(OH)₂, Zn(OH)₂, Al(OH)₃, Mg(OH)₂, Eisenhydroxide und Mn-Hydroxide. Diese Zusätze verbessern die Dauerbelastbarkeit der Elektrode im Zyklenbetrieb und sorgen für eine gute Ladeeffektivität. Statt als gesonderte Zusätze innerhalb der Trockenmischung können sie auch bereits im Nickelhydroxid eingeschlossen sein, sofern sie als Produkte einer Simultanfällung aus einer Lösung entsprechender Metallsalze gemeinsam mit dem Nickelhydroxid angefallen sind. In beiden Fällen sollte der Anteil der Fremdhydroxide an dem in der Trockenmischung vorliegenden Nickelhydroxid 12 bis 15 Gew. % betragen.

Dem Nickelhydroxid, gegebenenfalls mit Einschlüssen an Fremdhydroxiden, liegen vorzugsweise sphärisch geformte Partikel mit Korndurchmessern zwischen 3 und 300 »m zugrunde. Gesondert beigemischte Fremdhydroxide können Partikelgrößen zwischen 3 und 70 »m besitzen.

Die Partikel der Metallpulver sind vorzugsweise ebenfalls sphärisch geformt und weisen Korngrößen zwischen 0,1 und 50 »m auf.

Nachdem alle Bestandteile der Trockenmischung gründlich vorgemischt sind, wird schließlich das Kunststoff-Bindemittel, bestehend aus Polyethylen, Polypropylen, einem Polyester oder Polyvinylalkohol, in einer Menge von 2 bis 10 Gew % der Trockenmischung zugesetzt und das Ganze zur fertigen Walzmischung nachgemahlen. Alle Mischvorgänge werden vorteilhaft in Mischeinrichtungen mit intensiver Zerkleinerungswirkung durchgezührt, beispielsweise in Messermühlen, die mit hoher Drehzahl arbeiten. Dadurch wird insbesondere auch eine sehr gleichmäßige Verteilung der Bindermaterialien erzielt, wobei diese dünne Fäden ausbilden, welche die gesamte Pulverschüttung netzartig durchdringen. Diese walzmischung wird dann unter hohem Druck in einem Kalander zu einem 0,5 bis 0,8 mm dicken Laminat vorgewalzt und darauf auf das Trägermaterial aufgewalzt.

Im Falle des bevorzugten Akkumulators gemäß der Erfindung, nämlich des Nickel/Wasserstoff-Akkumulators oder Metallhydrid-Akkumulators, bildet ebenfalls eine Trockenpulvermischung neben einer geringen Menge pulverförmigen Kunststoffs im wesentlichen die Walzmischung für die negative Elektrode. Das Aktivmaterial, zugleich Hauptbestandteil dieser Trockenpulvermischung, ist hier ein zur elektrochemischen Wasserstoffaufnahme und -speicherung fähiges Metallpulver oder eine Metall-Legierung in Pulverform. Die elektrochemische Energiespeicherung bei diesen Materialien besteht in der oberflächennahen Entladung eines Protons aus dem Elektrolyten zu einem neutralen Wasserstoffatom und der anschließenden Speicherung dieses Wasserstoffatoms im Innern des metallischen Festkörpers.

Das Aktivmaterial ist vorzugsweise ergänzt durch eine zusätzliche Menge des Metalls bzw. der Metallegierung in der Hydridform, es besitzt somit eine Entladereserve.

Zwecks Verbesserung der elektrischen Leitfähigkeit sind dem Aktivmaterial weiterhin Metallpulver aus Nickel, Kobalt oder Kupfer, wahlweise auch Graphit und Leitruß beigemischt. Schließlich sind neben dem Aktivmaterial sauerstoffverzehrende Mittel in Gestalt einer kohlehaltigen Mischung vorgesehen. Deren Komponenten sind Leitruß, Aktivkohle und Polytetrafluorethylen, die etwa im Gewichtsverhältnis 3 bis 20 Gew. %, vorzugsweise 7,5 Gew % Leitruß, 50 bis 80 Gew. %, vorzugsweise 75 Gew. % Aktivkohle und 10 bis 30 Gew. %, vorzugsweise 17,5 Gew % Polytetrafluorethylen zueinander stehen.

Diese Mischung kann entweder der fertigen Elektrode in einer dünnen Schicht aufgewalzt oder als Bestandteil der Trockenpulvermischung bereits in diese eingemischt werden.

Als Bindemittel für die negative Elektrode kommen Kunststoffe aus der Reihe Polyethylen, Polypropylen, Polytetrafluorethylen, Polyvinylidenfluorid, Polyvinylidencarbonat, Polyvinylalkohol, Polyisobutylen und Polyacrylnitril infrage.

Es empfiehlt sich auch hier, zuerst eine intensive Durchmischung aller Komponenten der Trockenpulvermischung vorzunehmen und dieser dann das Bindemittel gesondert zuzumischen.

Die fertige Walzmischung setzt sich dann zusammen aus 60 bis 80 Gew. % H₂-speicherfähigem Metall oder Metallegierung, 5 bis 20 Gew. % desselben Aktivmaterials in der Hydridform, 10 bis 35 Gew. % Metallpulver oder 1 bis 6 Gew. % Ruß und Graphit als Leitmittel, 1 bis 6 Gew.% Bindemittel und 1 bis 8 Gew. % kohlehaltige Mischung für den Sauerstoffverzehr.

Damit entsteht die negative Walzelektrode vorzugsweise ebenfalls durch trockenes Aufwalzen auf ein Trägermaterial, wobei es wiederum günstig ist, die Walzmischung vor dem Aufbringen auf ein feinmaschiges Metallnetz oder Streckmetall zu einem Laminat von 0,3 bis 0,8 mm Dicke vorzunehmen.

Das Trägermaterial ist Nickel, Eisen, Kupfer oder Silber. Aus Gründen der Kosteneinsparung kann statt des massiven Nickel- oder Silbernetzes auch ein versilbertes oder vernickeltes Eisen- bzw. Kupfermaterial verwendet werden.

Sowohl bei der positiven als auch bei der negativen Walzelektrode hat sich eine dem Aufwalzprozeß vorausgehende Kobaltierung des Trägers durch stromlose oder galvanische Behandlung in einer Kobaltsalze enthaltenden Badflüssigkeit als günstig erwiesen, da sich die Strombelastbarkeit dadurch erhöht. Das auf den Träger bezogene Gewicht der Kobaltauflage kann 1 bis 25% betragen.

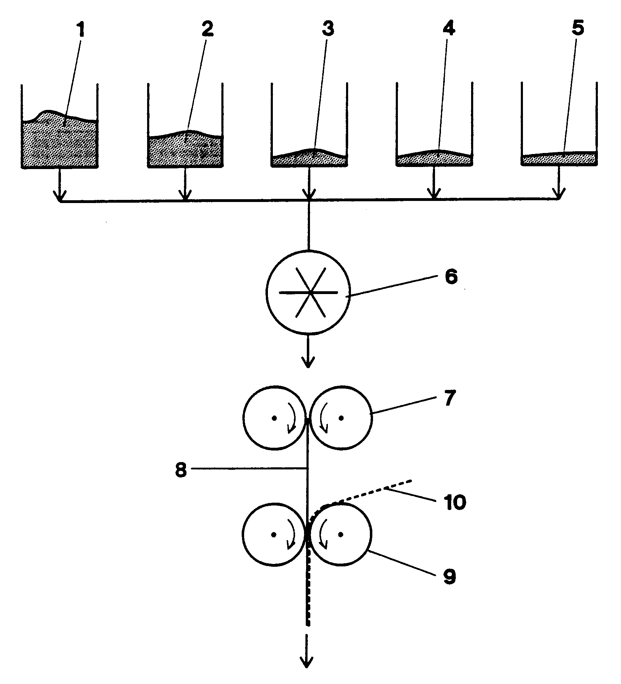

In der Figur ist der Herstellungsgang erfindungsgemäßer Walzelektroden, dessen Arbeitsschritte für positive und negative Elektroden im Prinzip die gleichen sind, schematisch wiedergegeben.

Danach wird zunächst die Walzmischung zubereitet, die sich jeweils zusammensetzt aus dem aktiven Material 1, aktiven Zusätzen 2 (Metallhydroxide außer Ni(OH)₂ bei positiver Elektrode, H₂-Speicherlegierung in der Hydridform bei negativer Elektrode), metallischen Zusätzen 3, kohlehaltiges Material 4 (O₂-verzehrende Mittel bei der negativen Elektrode, gegebenenfalls Leitruß oder Graphit bei der positiven Elektrode) und Bindemittel 5. Die Komponenten entsprechend den Positionen 1 bis 4 werden zweckmäßig für sich vorgemischt und die resultierende Trockenpulvermischung mit dem Bindemittel 5 in dem hochtourigen Trockenmischer 6 vereinigt. In dem Kalander 7 wird die fertige Walzmischung darauf zu einem Laminat bzw. Band 8 vorgewalzt und dieses im Kalander 9 auf ein netzförmiges Trägerband 10 aufgewalzt.

Eine vorteilhafte Nachbehandlung der positiven Walzelektrode (nicht dargestellt) kann darin bestehen, daß sie einer Lösung von Nickel- oder Kobaltsalzen ausgesetzt und anschließend mit noch gefüllten Poren in eine NaOH- oder KOH-Lösung getaucht wird, wodurch ein hydroxidischer Film auf den Massepartikeln der Elektrode abgeschieden wird, welcher zur Verbesserung der elektrischen Eigenschaften beiträgt.

Einen ähnlichen Erfolg bringt eine galvanische Nachbehandlung, dergestalt, daß das Elektrodenmaterial in eine Lösung mit Nickel- und Kobaltsalzen getaucht wird und daß metallisches Nickel und Kobalt abgeschieden werden. Die Menge des insgesamt abgeschiedenen Materials beträgt zwischen 3 und 25 % des Elektrodengewichts.

Negative Walzelektroden können durch Tauchbehandlung in 5 bis 15 %igen Dispersionen aus Polyethylen, Polytetrafluorethylen oder Acrylsäureverbindungen eine Kunststoffbeschichtung erhalten, die ihnen eine bessere mechanische Stabilität verleiht.

Aus dem wie beschrieben durch Walzen hergestellten positiven und negativen Elektrodenmaterial lassen sich besonders vorteilhaft gasdichte alkalische Zellen bauen. Die Elektrodendicken werden bei der Herstellung je nach Elektrodentyp so eingestellt, daß das flächenbezogene Verhältnis von Gesamtkapazität der negativen Elektrode zu Gesamtkapazität der positiven Elektroden zwischen 1.2 und 2 liegt. Beide Elektroden werden im entladenen Zustand durch ein Vlies aus PE- PA- oder PP-Fasern voneinander separiert und spiralförmig gewickelt. Als Elektrolyt wird eine wässrige 5 bis 8 n KOH-Lösung mit LiOH-Zusätzen von 0.3 bis 2 n verwendet. Die Zellen werden durch Ladung mit einem 10stündigen Nennstrom und Entladung mit einem 5stündigen Strom in Betrieb gesetzt, nachdem sie durch eine Temperaturlagerung bei 45°C bis 80°C während eines Zeitraumes von 1 bis 14 Tagen eine Aktivierung erfahren haben. Nach Absolvieren von zwei solcher Zyklen haben die Zellen ihre volle elektrische Belastbarkeit erreicht.

## Patentansprüche

1. Gasdichter alkalischer Akkumulator zur Speicherung von elektrischer Energie mit einer positiven Elektrode, die im wesentlichen Nickelhydroxid als aktives Material umfaßt, einer negativen Elektrode und einem zwischen den Elektroden angeordneten Separator in einem geschlossenen Gehäuse, dadurch gekennzeichnet, daß sowohl die positive Elektrode als auch die negative Elektrode durch Aufwalzen einer das jeweilige Aktivmaterial sowie ein Kunststoffbindemittel enthaltenden Trockenpulvermischung auf ein metallisches Trägermaterial gebildet ist.

2. Gasdichter alkalischer Akkumulator nach Anspruch 1, dadurch gekennzeichnet, daß er ein Nickel/Wasserstoff-Akkumulator ist.

3. Gasdichter alkalischer Akkumulator nach Anspruch 2, dadurch gekennzeichnet, daß die Walzmischung für die positive Elektrode durch Mischen eines pulverförmigen Kunststoffs mit einer Trockenmischung von Nickelhydroxid, Nickelmetallpulver sowie mindestens einem weiteren Metallpulver aus der Gruppe der Metalle Co, Cu, Fe, Mo, W, Mn, Cr, Ti und Zn gebildet ist.

4. Gasdichter alkalischer Akkumulator nach Anspruch 2, dadurch gekennzeichnet, daß die Walzmischung für die negative Elektrode durch Mischen eines pulverförmigen Kunststoffs mit einer im wesentlichen aus einem wasserstoffspeichernden Metall oder einer Wasserstoffspeicherlegierung bestehenden Trockenpulvermischung gebildet ist.

5. Gasdichter alkalischer Akkumulator nach Anspruch 3, dadurch gekennzeichnet, daß die Trockenmischung zusätzlich ein oder mehrere Hydroxide aus der Gruppe Co(OH)₂, Cd(OH)₂, Zn(OH)₂, Mg(OH)₂, Al(OH)₃, Eisenhydroxide und Mn-Hydroxide enthält.

6. Gasdichter alkalischer Akkumulator nach Anspruch 3 oder 5, dadurch gekennzeichnet, daß der Gewichtsanteil des Nickelhydroxids an der Trockenmischung 75 bis 90 % und der Gewichtsanteil der metallischen Komponenten 5 bis 25 % beträgt.

7. Gasdichter alkalischer Akkumulator nach einem der Ansprüche 3, 5 oder 6, dadurch gekennzeichnet, daß das Kunststoff-Bindemittel Polyethylen, Polypropylen, ein Polyester, Polyvinylalkohol oder Polytetrafluorethylen ist.

8. Gasdichter alkalischer Akkumulator nach Anspruch 4, dadurch gekennzeichnet, daß die Trockenpulvermischung eine zusätzliche Menge des wasserstoffspeichernden Metalls in Hydridform enthält.

9. Gasdichter alkalischer Akkumulator nach Anspruch 4 oder 8, dadurch gekennzeichnet, daß die Trockenpulvermischung ein oder mehrere Metallpulver aus der Gruppe Ni, Co, Cu als Leitmittel enthält.

10. Gasdichter alkalischer Akkumulator nach einem der Ansprüche 4, 8 oder 9, dadurch gekennzeichnet, daß der Trockenpulvermischung eine Massemischung aus Leitruß, Aktivkohle und Polytetrafluorethylen als sauerstoffverzehrendes Mittel beigemischt ist.

## Claims

1. Gastight alkaline storage battery for storing electrical energy, having a positive electrode essentially comprising nickel hydroxide as active material, a negative electrode and a separator disposed between the electrodes in a closed casing, characterized in that both the positive electrode and the negative electrode are formed by rolling a dry powder mixture containing the respective active material and a plastics binder onto a metallic support material.

2. Gastight alkaline storage battery according to Claim 1, characterized in that it is a nickel/hydrogen storage battery.

3. Gastight alkaline storage battery according to Claim 2, characterized in that the rolling mixture for the positive electrode is formed by mixing a powdered plastics material with a dry mixture of nickel hydroxide, nickel-metal powder and at least one further metal powder from the group comprising the metals Co, Cu, Fe, Mo, W, Mn, Cr, Ti and Zn.

4. Gastight alkaline storage battery according to Claim 2, characterized in that the rolling mixture for the negative electrode is formed by mixing a powdered plastics material with a dry powder mixture essentially composed of a hydrogen-storing metal or a hydrogen-storage alloy.

5. Gastight alkaline storage battery according to Claim 3, characterized in that the dry mixture additionally contains one or more hydroxides from the group comprising Co(OH)₂, Cd(OH)₂, Zn(OH)₂, Mg(OH)₂, Al(OH)₃ iron hydroxides and Mn hydroxides.

6. Gastight alkaline storage battery according to Claim 3 or 5, characterized in that the proportion by weight of the nickel hydroxide in the dry mixture is 75 to 90% and the proportion by weight of the metallic components 5 to 25%.

7. Gastight alkaline storage battery according to one of Claims 3, 5 or 6, characterized in that the plastics binder is polyethylene, polypropylene, a polyester, polyvinyl alcohol or polytetrafluoroethylene.

8. Gastight alkaline storage battery according to Claim 4, characterized in that the dry powder mixture contains an additional amount of the hydrogen-storing metal in hydride form.

9. Gastight alkaline storage battery according to Claim 4 or 8, characterized in that the dry powder mixture contains one or more metal powders from the group comprising Ni, Co, Cu as conductive agent.

10. Gastight alkaline storage battery according to one of Claims 4, 8 or 9, characterized in that a mixed mass comprising conductive soot, active carbon and polytetrafluoroethylene is added to the dry powder mixture as oxygen-consuming agent.

## Revendications

1. Accumulateur alcalin étanche aux gaz pour accumuler de l'énergie électrique, avec une électrode positive qui comprend essentiellement comme matériau actif de l'hydroxyde de nickel, avec une électrode négative et un séparateur placé entre les électrodes dans un boîtier clos, caractérisé en ce qu'on forme l'électrode positive comme l'électrode négative par laminage d'un mélange de poudres sèches qui contient chaque matériau actif ainsi qu'un liant de matière plastique sur un matériau support métallique.

2. Accumulateur alcalin étanche aux gaz selon la revendication 1, caractérisé en ce que c'est un accumulateur nickel/hydrogène.

3. Accumulateur alcalin étanche aux gaz selon la revendication 2, caractérisé en ce que le mélange à laminer de l'électrode positive est obtenu par mélange d'un mélange à sec d'hydroxyde de nickel de poudre de métal nickel ainsi que d'au moins une autre poudre métallique du groupe des métaux Co, Cu, Fe, Mo, W, Mn, Cr, Ti ou Zn.

4. Accumulateur alcalin étanche aux gaz selon la revendication 2, caractérisé en ce que le mélange à laminer de l'électrode négative est formé par mélange d'une matière plastique en poudre avec un mélange de poudres sèches constitué essentiellement d'un métal absorbant l'hydrogène et d'un alliage absorbant l'hydrogène.

5. Accumulateur alcalin étanche aux gaz selon la revendication 3, caractérisé en ce que le mélange à sec comprend en plus un ou plusieurs hydroxydes du groupe Co(OH)₂, Cd(OH)₂, Zn(OH)₂, Mg(OH)₂, Al(OH)₃, des hydroxydes de fer et des hydroxydes de Mn.

6. Accumulateur alcalin étanche aux gaz selon les revendications 3 ou 5, caractérisé en ce que la proportion pondérale de l'hydroxyde de nickel au mélange à sec représente 75 à 90 % et la proportion pondérale des composants métalliques 5 à 25 %.

7. Accumulateur alcalin étanche aux gaz selon l'une des revendications 3, 5 ou 6, caractérisé en ce que le liant de matière plastique est du polyéthylène, du polypropylène, un polyester, poly-alcool vinylique) ou polytétrafluoroéthylène.

8. Accumulateur alcalin étanche aux gaz selon la revendication 6, caractérisé en ce que le mélange de poudres sèches contient une quantité supplémentaire de métal absorbant sous forme d'hydrure.

9. Accumulateur alcalin étanche aux gaz selon les revendications 4 ou 8, caractérisé en ce que le mélange de poudres sèches contient une ou plusieurs poudres métalliques du groupe Ni, Co, Cu comme conducteur.

10. Accumulateur alcalin étanche aux gaz selon l'une des revendications 4, 8 ou 9, caractérisé en ce qu'au mélange de poudres sèches, on ajoute par mélange un mélange de noir de carbone conducteur, de charbon actif et de polyétrafluoroéthylène en tant qu'agent consommant l'oxygène.
